# EUROPÄISCHE PATENTSCHRIFT

(11) **EP 2 819 814 B1**
(45) Veröffentlichungstag und Bekanntmachung des Hinweises auf die Patenterteilung: **20.04.2016**
(21) Anmeldenummer: 13707374.8
(22) Anmeldetag: 01.03.2013
(51) Int. Cl.: B26D 3/16, B26F 3/00

(54) **VORRICHTUNG ZUM SCHNEIDEN VON ABGEERNTETEN SPARGELSTANGEN ODER VON ANDEREN LÄNGLICHEN LEBENSMITTELN**
DEVICE FOR CUTTING HARVESTED ASPARAGUS SPEARS OR OTHER ELONGATED FOODS
DISPOSITIF DE DÉCOUPAGE DE TURIONS D'ASPERGE RÉCOLTÉS OU D'AUTRES ALIMENTS DE FORME ALLONGÉE

(30) Priorität: 02.03.2012 DE 102012004062
(43) Veröffentlichungstag der Anmeldung: 07.01.2015
(73) Patentinhaber: Neubauer, Hermann, 59514 Welver (DE); Neubauer, Christoph, 59514 Welver (DE)
(72) Erfinder: Neubauer, Hermann, 59514 Welver (DE); Neubauer, Christoph, 59514 Welver (DE)
(74) Vertreter: Graefe, Jörg
(86) Internationale Anmeldenummer: PCT/EP2013/054182
(87) Internationale Veröffentlichungsnummer: WO 2013/128004

(56) Entgegenhaltungen:
- DE-A1-102011 119 556
- US-A- 5 983 763

## Beschreibung

Die vorliegende Erfindung betrifft eine Vorrichtung zum Schneiden von abgeernteten Spargelstangen gemäß dem Oberbegriff des Anspruchs 1.

Aus der DE 10 2010 025 026 ist eine Vorrichtung der vorgenannten Art bekannt. Darin wird ein aus einem Hartmetall bestehender Stift als Ablenkelement offenbart. Als nachteilig bei dieser Vorrichtung erweist es sich, dass der Stift trotz des gewählten harten Materials bereits nach kurzer Zeit nicht tolerierbare Abnutzungserscheinungen zeigt, weil der Wasserstrahl Material von seiner Oberfläche abträgt. Dadurch muss nach einer relativ kurzen Benutzungsdauer das Ablenkelement ausgetauscht werden.

Das der vorliegenden Erfindung zugrunde liegende Problem ist die Schaffung einer Vorrichtung der eingangs genannten Art, die eine größere Standzeit aufweist.

Dies wird erfindungsgemäß durch eine Vorrichtung der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass die Ablenkmittel derart ausgebildet sind, dass sie während des Ablenkens des Strahls beweglich sind. Durch die Bewegbarkeit kann der von dem Strahl getroffene Teil der Oberfläche des Ablenkmittels dem Strahl ausweichen, so dass die Oberfläche des Ablenkmittels nicht oder nur unmerklich beschädigt wird. Damit wird die Standzeit der Anlage deutlich erhöht.

Beispielsweise können die Ablenkmittel während des Ablenkens des Strahls eine Rotations- und/oder eine Translationsbewegung ausführen.

Dazu kann vorgesehen sein, dass die Ablenkmittel ein drehbar und/oder verschiebbar gelagertes oder gehaltertes Ablenkteil umfassen, das beispielsweise zylindrisch geformt ist. Es sind durchaus andere Gestaltungen des Ablenkteils möglich. Beispielsweise kann dieses auch kugelförmig oder scheibenförmig sein. Auch andere Gestaltungen sind möglich, dabei insbesondere solche, die eine Rotation erlauben.

Insbesondere kann zumindest die Oberfläche des Ablenkteils zumindest abschnittsweise aus einem Hartmetall oder einem vergleichbar harten Material bestehen.

Anstelle von Spargelstangen können mit der erfindungsgemäßen Vorrichtung auch andere längliche Lebensmittel, wie insbesondere Möhren oder Gurken geschnitten werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Draufsicht auf eine erfindungsgemäße Vorrichtung zum Schneiden von abgeernteten Spargelstangen;
- Fig. 2: eine schematische Detailansicht der Schneidmittel;
- Fig. 3: eine Detailansicht der Ablenkmittel;
- Fig. 4: eine Draufsicht auf die Stifthalterung der Ablenkmittel.

Die erfindungsgemäße Vorrichtung erlaubt das effektive selektive Schneiden von Spargelstangen. Insbesondere wird ein Verfahren angegeben, das es erlaubt, unsortierten Spargel auf jede beliebige Länge beispielsweise in einer automatischen Spargelsortiermaschine zu schneiden.

Es besteht durchaus die Möglichkeit, mit einer erfindungsgemäßen Vorrichtung auch andere längliche Lebensmittel, wie insbesondere Möhren oder Gurken zu schneiden. Wenn daher im Nachfolgenden explizit Spargelstangen genannt werden, sollen die dargestellten Teile der Vorrichtung auch für das Schneiden anderer länglicher Lebensmittel geeignet sein.

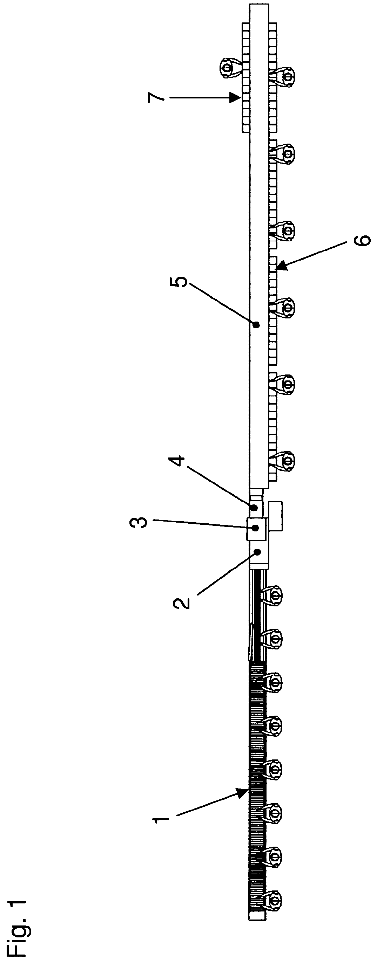

Die in Fig. 1 schematisch abgebildete Vorrichtung umfasst einen Auflagebereich 1, auf den Spargelstangen aufgelegt werden können. Insbesondere in diesem Bereich kann auch eine Vereinzelung der Spargelstangen erfolgen. Von diesem Auflagebereich 1 werden die Stangen von einem nicht dargestellten, als Zuführmittel dienenden Förderband einer Vorschneide- und Wascheinheit 2 zugeführt.

An die Vorschneide- und Wascheinheit 2 schließt sich ein Mess- und Schneid-Bereich 3 an, in dem sowohl eine erste Kamera, als auch eine Schneideeinheit angeordnet sind. Dabei liegen die Spargelstangen so auf dem Förderband, dass die Längsrichtung der Spargelstangen der Querrichtung des Förderbandes entspricht beziehungsweise so, dass die Spargelstangen senkrecht zur Förderrichtung ausgerichtet sind.

Die von der ersten Kamera erfassten Daten werden von einer Rechnereinheit verarbeitet, die die Sortierklasse des Spargels (wie beispielsweise Länge, Dicke, Blüte etc.) einer von der ersten Kamera erfassten Spargelstange bestimmt. Die auf diese Weise erhaltenen Daten werden zur Ansteuerung der Schneideinheit verwendet, welche in der Lage ist, jede einzelne Spargelstange definiert auf Länge zu schneiden. Dabei ist es unerheblich, ob der Spargel gerade oder gekrümmt ist. Die gestreckte Länge wird exakt mit entsprechenden Algorithmen aus den von der ersten Kamera erfassten Daten bestimmt.

Hinter dem Mess- und Schneid-Bereich 3 ist eine zweite Kamera 4 oder ein anderes geeignetes Messmittel vorgesehen, das eine Kontrolle des Schneidvorgangs ermöglicht.

Daran anschließend ist ein Sortier- und Ausgabebereich 5 angeordnet, der eine Mehrzahl, vorzugsweise mehr als 10, insbesondere mehr als 30, beispielsweise 56, Ausgabefächer aufweisen kann. Insbesondere können die Ausgabefächer mit Waageeinheiten 6 versehen sein, um das Zusammenfassen von Spargelstangen zu Bunden mit einem vorgegebenen Gewicht zu ermöglichen.

In diesem Sortier- und Ausgabebereich 5 kann eine Sortierung der Spargelstangen in Abhängigkeit von Eigenschaften erfolgen, die mittels eines Computers aus den von der ersten Kamera und/oder der zweiten Kamera 4 ermittelten Daten bestimmt werden. In Fig. 1 ist mit dem Bezugszeichen 7 ein weiterer optionaler Ausgabebereich bezeichnet.

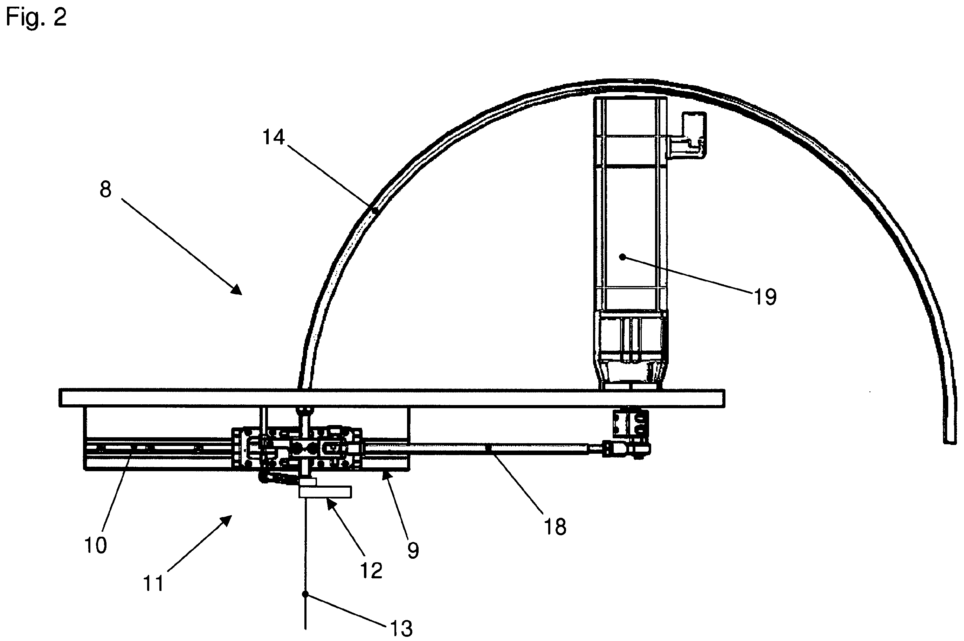

Die aus Fig. 2 detailliert abgebildete Schneideeinheit 8 umfasst einen Schlitten 9, der auf einer Führungsschiene 10 in Querrichtung bewegbar ist, insbesondere senkrecht zur Förderrichtung des Förderbandes, das die Spargelstangen zuführt. Damit bewegt sich der Schlitten 9 in Längsrichtung der auf dem Förderband aufliegenden Spargelstangen.

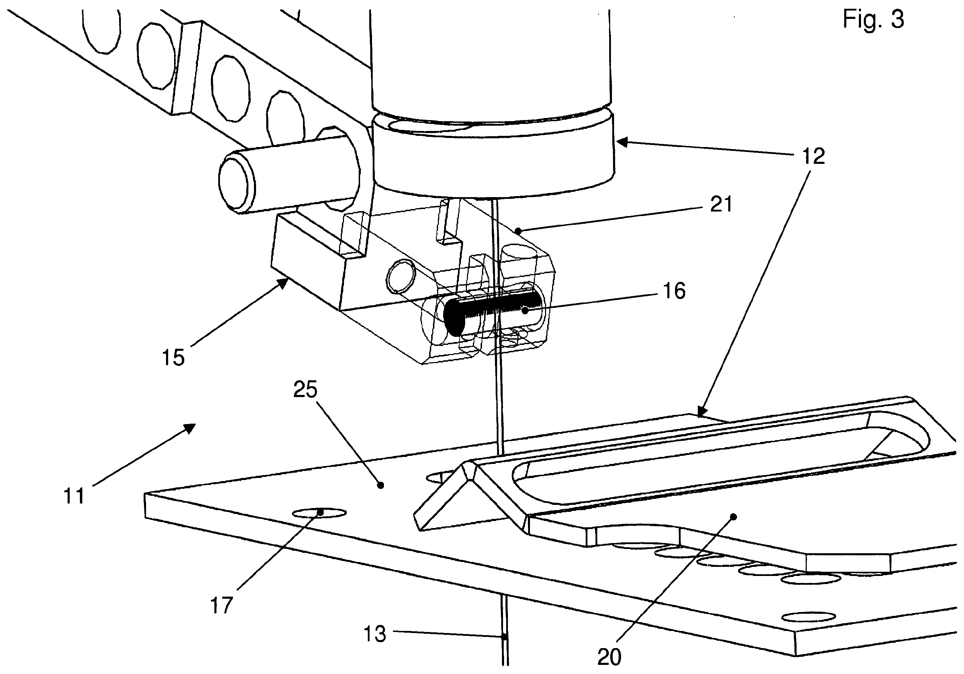

Die Schneideeinheit 8 umfasst weiterhin Schneidmittel 11, die als Wasserstrahlschneidgerät ausgebildet sind. Fig. 2 und Fig. 3 zeigen die Austrittsdüse 12 des Wasserstrahlschneidgeräts, aus der ein zum Schneiden verwendbarer Wasserstrahl 13 austritt. Die Austrittsdüse 12 ist über einen Schlauch 14 mit einer nicht abgebildeten Hochdruckpumpe verbunden.

Die Schneideeinheit 8 umfasst weiterhin Ablenkmittel 15, die den Wasserstrahl 13 unterbrechen können. Die Ablenkmittel 15 weisen dazu einen aus Hartmetall bestehenden als Ablenkteil 16 dienenden Stift auf, der computergesteuert in den Wasserstrahl 13 hineinbewegt werden kann (siehe Fig. 3). An dem Stift wird der Wasserstrahl 13 aufgespalten und trifft auf eine auf dem Boden 25 der Austrittsdüse 12 vorgesehene Prallplatte 20 (siehe Fig. 3).

Die Prallplatte 20 weist eine abschnittsweise gefaltete oder gewölbte Struktur auf. Weiterhin ist die Prallplatte 20 von den in Fig. 3 nicht abgebildeten Seitenwänden der Austrittsdüse 12 umgeben, die ein seitliches Austreten des Strahls verhindern. Auf diese Weise bilden sich bei abgelenktem Strahl in der Austrittsdüse 12 Tropfen, die durch Öffnungen 17 im Boden 25 der Austrittsdüse 12 nach unten austreten können.

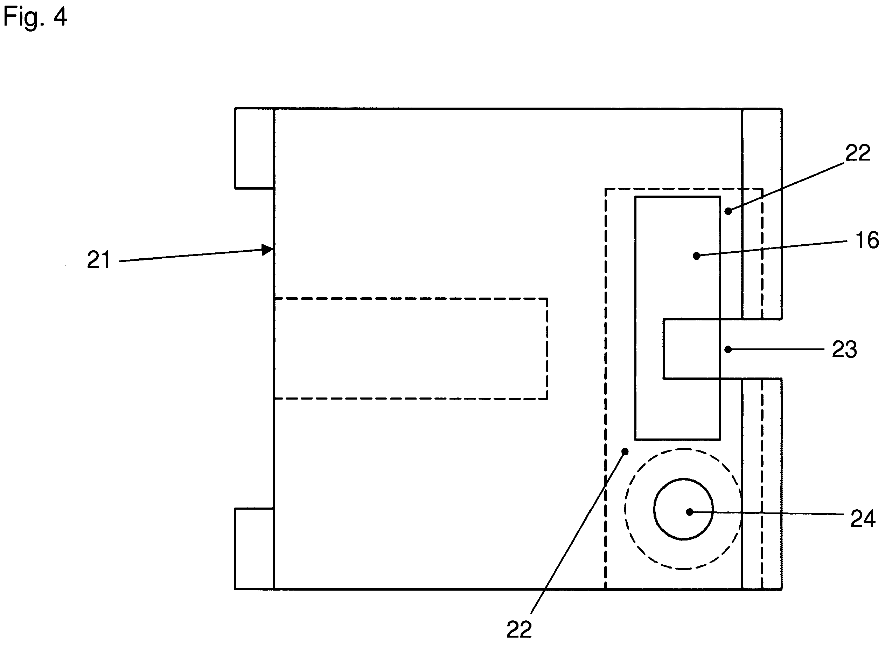

Der als Ablenkteil 16 dienenden Stift ist in einer aus Fig. 3 und Fig. 4 ersichtlichen Stifthalterung 21 gehaltert. Die Stifthalterung 21 weist dazu eine hohlzylindrische Aufnahme 22 auf, die sowohl in axialer, als auch in radialer Richtung größer als der Stift ist. Der als Ablenkteil 16 dienende Stift kann somit in der Aufnahme 22 sowohl rotieren, als auch in verschiedene Richtungen ausweichen, wenn er von dem Wasserstrahl 13 getroffen wird.

Die Stifthalterung 21 weist eine Ausnehmung 23 auf, durch die der Wasserstrahl 13 hindurch treten und auf den als Ablenkteil 16 dienenden Stift treffen kann. Weiterhin weist die Stifthalterung 21 eine Gewindebohrung 24 auf, in die eine nicht abgebildete Madenschraube eingeschraubt werden kann, die die Aufnahme 22 in axialer Richtung begrenzen kann.

Die Unterbrechung des Wasserstrahls 13 ist bei Bewegungen der Schneideinheit 8 notwendig, um ein nicht beabsichtigtes Schneiden von unter dem Wasserstrahl 13 befindlichen Spargelstangen zu vermeiden.

An dem Schlitten 9 ist eine Stange 18 angebracht, die exzentrisch mit einem Servomotor 19 verbunden ist. Durch entsprechende Ansteuerung des Servomotors 19 kann der Schlitten 9 mit sehr hoher Genauigkeit in Querrichtung des Förderbandes positioniert werden.

Es besteht die Möglichkeit, anstelle einer Schneideinheit 8 mehrere in Förderichtung hintereinander angeordnete Schneideinheiten 8 vorzusehen. Dies kann bei hoher Fördergeschwindigkeit durchaus sinnvoll sein, weil ansonsten die Geschwindigkeit, mit der der Schlitten 9 verfahren werden muss, zu groß wird.

Bei der dargestellten Schneideinheit 8 kann der von den Schneidmitteln 11 ausgehende Wasserstrahl 13 in Abhängigkeit von den erfassten Daten beziehungsweise von den daraus ermittelten Sortierklassen des Spargels in eine gewünschte Position in Querrichtung verfahren werden. Auf diese Weise kann jede einzelne Spargelstange selektiv geschnitten werden. Das bedeutet, dass sich bei verschiedenen Spargelstangen die Stellen, an denen geschnitten wird, in Abhängigkeit von den Sortierklassen oder anderen geeigneten Kriterien unterscheiden.

Alternativ besteht die Möglichkeit, nicht die mindestens eine Schneideeinheit 8 relativ zu den Spargelstangen beziehungsweise dem Förderband, auf dem die Spargelstangen aufliegen, in Querrichtung des Förderbandes beziehungsweise in Längsrichtung der Spargelstangen zu bewegen, sondern die Spargelstangen relativ zu der mindestens eine Schneideeinheit 8 in Querrichtung des Förderbandes beziehungsweise in Längsrichtung der Spargelstangen zu bewegen.

Dies kann beispielsweise dadurch geschehen, dass die Spargelstangen in Querrichtung des Förderbandes beziehungsweise in ihrer Längsrichtung auf dem Förderband verschoben werden. Dies kann durch Schieber oder Vibriermittel oder dergleichen erreicht werden. Alternativ können auch ein Teil des Förderbandes oder das gesamte Förderband in Querrichtung bewegt werden.

Es ist auch denkbar, eine Relativbewegung der mindestens einen Schneideeinheit 8 mit einer Relativbewegung der Spargelstangen zu kombinieren.

Es ist auch denkbar, bei einer erfindungsgemäßen Vorrichtung zwar Positioniermittel vorzusehen, die die Spargelstangen hinsichtlich der Längsrichtung der Spargelstangen relativ zu den Schneidmitteln positionieren können und/oder die Schneidmittel hinsichtlich der Längsrichtung der Spargelstangen relativ zu den Spargelstangen positionieren können, dabei aber als Schneidmittel mindestens ein Messer zu verwenden. Insbesondere wenn die Spargelstangen und/oder zumindest Teile des Förderbandes bewegt werden, können feststehende, insbesondere rotierende Messer durchaus praktikabel sein.

## Patentansprüche

1. Vorrichtung zum Schneiden von abgeernteten Spargelstangen oder von anderen länglichen Lebensmitteln, umfassend
- Schneidmittel (11) für das Schneiden der Spargelstangen oder der anderen länglichen Lebensmittel, die einen Strahl, insbesondere einen Wasserstrahl (13), erzeugen können, mit dem die Spargelstangen oder die anderen länglichen Lebensmittel geschnitten werden können, sowie
- Ablenkmittel (15) für die Unterbrechung des Strahls, **dadurch gekennzeichnet, dass** die Ablenkmittel (15) derart ausgebildet sind, dass sie während des Ablenkens des Strahls beweglich sind.

2. Vorrichtung nach Anspruch 1, **dadurch gekennzeichnet, dass** die Ablenkmittel (15) oder ein Teil der Ablenkmittel (15) während des Ablenkens des Strahls eine Rotations- und/oder eine Translationsbewegung ausführen können.

3. Vorrichtung nach einem der Ansprüche 1 oder 2, **dadurch gekennzeichnet, dass** die Ablenkmittel (15) ein drehbar und/oder verschiebbar gelagertes oder gehaltertes Ablenkteil (16) umfassen.

4. Vorrichtung nach Anspruch 3, **dadurch gekennzeichnet, dass** das Ablenkteil (16) eine zylinderförmige oder eine kugelförmige oder eine scheibenförmige oder eine vergleichbare Gestaltung aufweist.

5. Vorrichtung nach einem der Ansprüche 1 oder 2, **dadurch gekennzeichnet, dass** zumindest die Oberfläche des Ablenkteils (16) zumindest abschnittsweise aus einem Hartmetall oder einem vergleichbar harten Material besteht.

## Claims

1. Device for cutting harvested asparagus spears or other elongate foodstuffs, comprising
- cutting means (11) for cutting the asparagus spears or other elongate foodstuffs, said cutting means (11) being able to generate a jet, in particular a water jet (13), by way of which the asparagus spears or the other elongate foodstuffs can be cut, and
- deflection means (15) for interrupting the jet, **characterized in that** the deflection means (15) are configured such that they are movable during the deflection of the jet.

2. Device according to Claim 1, **characterized in that** the deflection means (15) or a part of the deflection means (15) can carry out a movement in rotation and/or translation during the deflection of the jet.

3. Device according to either of Claims 1 and 2, **characterized in that** the deflection means (15) comprise a rotatably and/or displaceably mounted or held deflection part (16).

4. Device according to Claim 3, **characterized in that** the deflection part (16) has a cylindrical or spherical or disk-shaped or comparable design.

5. Device according to either of Claims 1 and 2, **characterized in that** at least the surface of the deflection part (16) consists at least partially of a hard metal or a comparably hard material.

## Revendications

1. Dispositif de découpage de turions d'asperges récoltés ou d'autres aliments de forme allongée, comprenant :
- des moyens de découpage (11) pour le découpage des turions d'asperges ou des autres aliments de forme allongée, qui peuvent générer un jet, notamment un jet d'eau (13), avec lequel les turions d'asperges ou les autres aliments de forme allongée peuvent être découpés, et
- des moyens de déviation (15) pour l'interruption du jet,
**caractérisé en ce que** les moyens de déviation (15) sont réalisés de telle sorte qu'ils puissent être déplacés pendant la déviation du jet.

2. Dispositif selon la revendication 1, **caractérisé en ce que** les moyens de déviation (15) ou une partie des moyens de déviation (15) peuvent effectuer un mouvement de rotation et/ou de translation pendant la déviation du jet.

3. Dispositif selon l'une quelconque des revendications 1 ou 2, **caractérisé en ce que** les moyens de déviation (15) comprennent une partie de déviation (16) supportée ou retenue de manière rotative et/ou déplaçable.

4. Dispositif selon la revendication 3, **caractérisé en ce que** la partie de déviation (16) présente une forme cylindrique ou sphérique ou une forme en disque ou similaire.

5. Dispositif selon l'une quelconque des revendications 1 ou 2, **caractérisé en ce qu'**au moins la surface de la partie de déviation (16) se compose au moins en partie d'un métal dur ou d'un matériau dur comparable.
